# EUROPÄISCHE PATENTANMELDUNG

(11) **EP 1 069 410 A1**
(43) Veröffentlichungstag der Anmeldung: **17.01.2001**
(21) Anmeldenummer: 99113406.5
(22) Anmeldetag: 12.07.1999
(51) Int. Cl.: G01D 11/30

(54) **Vorrichtung zur lösbaren Verankerung eines Sensors**

(71) Anmelder: Festo AG & Co, 73734 Esslingen (DE)
(72) Erfinder: Demuth, Stefan-Johannes, 71726 Benningen (DE); Schütte, Manfred, 73061 Ebersbach (DE)
(74) Vertreter: Abel, Martin, Dipl.-Ing.

(57) **Zusammenfassung**

Es wird eine Vorrichtung zur lösbaren Verankerung eines Sensors (7) in einer Verankerungsnut (3) vorgeschlagen. Sie enthält eine unter Einnahme einer Arbeitsposition in der Verankerungsnut (3) festklemmbare Verankerungseinheit (22) und ein sensorseitig vorgesehenes, lösbar mit der Verankerungseinheit (22) verbundenes Kupplungsteil (24). Letzteres ist bei in der festgeklemmten Arbeitsposition verbleibender Verankerungseinheit (22) gemeinsam mit dem Sensor (7) von der Verankerungseinheit (22) und aus der Verankerungsnut (3) entfernbar.

## Beschreibung

Die Erfindung betrifft eine Vorrichtung zur lösbaren Verankerung eines Sensors in einer Verankerungsnut.

Ein mit einer derartigen Vorrichtung ausgestatteter Sensor geht aus dem deutschen Gebrauchsmuster 298 11 811.4 hervor. An dem Sensor ist dort ein drehbewegliches Klemmteil vorgesehen, das bei in eine Verankerungsnut eingesetztem Sensor verdreht wird, bis es zwischen den gegenüberliegenden Nutflanken der Verankerungsnut verspannt ist.

Eine im deutschen Gebrauchsmuster G 94 14 869.4 beschriebene Verankerungsvorrichtung sieht ebenfalls ein am Sensor drehgelagertes Klemmteil vor. Die Klemmfunktion basiert jedoch darauf, daß eine Schraube gegen den Nutgrund vorgeschraubt wird, so daß das Klemmteil mit Abstufungen der Nutflanken verspannt wird. Eine in dem deutschen Gebrauchsmuster G 94 14 869.4 ebenfalls beschriebene Ausführungsform greift auf federelastisch biegbare Haltearme zurück, die bei in die Verankerungsnut eingesetztem Sensor Abstufungen der Nutflanken hintergreifen.

Allen bekannten Bauformen ist gemeinsam, daß sich der Sensor zwar zuverlässig in einer Arbeitsposition fixieren läßt, jeder Sensoraustausch jedoch eine umständliche Neujustierung des Sensors zur Folge hat.

Es ist die Aufgabe der vorliegenden Erfindung, eine Vorrichtung zur lösbaren Verankerung eines Sensors in einer Verankerungsnut zu schaffen, die den beispielsweise defektbedingt erforderlichen Sensoraustausch vereinfacht.

Gelöst wird diese Aufgabe mit einer Vorrichtung zur lösbaren Verankerung eines Sensors in einer Verankerungsnut, die mit einer unter Einnahme einer Arbeitsposition in der Verankerungsnut festklemmbaren Verankerungseinheit ausgestattet ist und über ein sensorseitig vorgesehenes, lösbar mit der Verankerungseinheit verbundenes Kupplungsteil verfügt, das bei in der festgeklemmten Arbeitsposition verbleibender Verankerungseinheit gemeinsam mit dem Sensor von der Verankerungseinheit und aus der Verankerungsnut entfernbar ist.

Der Sensor wird nun über eine separat ausgebildete Verankerungseinheit in der Verankerungsnut fixiert, wobei die zwischen dem sensorseitigen Kupplungsteil und der Verankerungseinheit vorhandene Schnittstelle ein bedarfsgemäßes Entfernen des Sensors ermöglicht, ohne die Arbeitsposition der Verankerungseinheit zu verändern. Erfolgt beispielsweise ein defektbedingter Sensoraustausch, kann der neue Sensor anstelle des alten Sensors an der während des Austausches seine Position unverändert beibehaltenden Verankerungseinheit fixiert werden, ohne daß es einer Neujustierung bedürfte.

Vorteilhafte Weiterbildungen der Erfindung gehen aus den Unteransprüchen hervor.

Prinzipiell könnte das Kupplungsteil als separates Bauteil ausgeführt sein, das einerseits den Sensor trägt und andererseits lösbar mit der Verankerungseinheit verbindbar ist. Wesentlich kostengünstiger ist jedoch eine Lösung, bei der das Kupplungsteil einen einstückigen Bestandteil des Sensors bildet und mithin der Sensor unmittelbar an der Verankerungseinheit festlegbar ist.

Zur Aktivierung der Klemmfunktion ist der Verankerungseinheit zweckmäßigerweise mindestens ein Betätigungselement zugeordnet, das beispielsweise als Schraube ausgeführt ist. Dabei ist von Vorteil, wenn durch das Betätigungselement bei Bedarf auch eine Deaktivierung der Klemmfunktion erfolgen kann, um beispielsweise für eine Neujustierung eines Sensors die Verankerungseinheit an anderer Stelle der Verankerungsnut positionieren zu können.

Eine einfache Handhabung in Verbindung mit einer geringen Anzahl von Bauteilen ergibt sich, wenn das mindestens eine Betätigungselement gleichzeitig ein zur Fixierung des Kupplungsteils an der Verankerungseinheit dienendes Befestigungselement bildet. Hier kann mit einem Element die feste Fixierung zwischen Sensor und Verankerungseinheit und gleichzeitig die feste Verankerung der Verankerungseinheit in der Verankerungsnut bewirkt werden. Zweckmäßigerweise kommt insgesamt nur ein einziges kombiniertes Befestigungs- und Betätigungselement zum Einsatz.

Um die Montage und Demontage des Kupplungsteils bezüglich der Verankerungseinheit zu vereinfachen, und auch um eine stets reproduzierbare Relativposition zwischen dem Sensor und der Verankerungseinheit gewährleisten zu können, ist zweckmäßigerweise eine zwischen dem Kupplungsteil und der Verankerungseinheit wirksame lösbare Steckverbindungseinrichtung vorgesehen, die beispielsweise nach Art einer Schwalbenschwanzverbindung ausgestaltet ist. Derart fixiert ist ein Abkippen des Sensors verhindert und ein sicherer Halt gewährleistet. Die Steckverbindungseinrichtung kommt zweckmäßigerweise in Kombination mit dem mindestens einen Befestigungselement zum Einsatz.

Zu ihrer klemmenden Befestigung in der Verankerungsnut ist die Verankerungseinheit zweckmäßigerweise mit zwei in Querrichtung der Verankerungsnut zueinander beabstandeten Klemmschenkeln ausgestattet, denen ein bewegliches Spreizelement zugeordnet ist. Zur Aktivierung der Klemmfunktion wird das Spreizelement zwischen die beiden Klemmschenkel hineingedrückt, so daß diese auseinandergespreizt werden und gegen die längsseitigen Nutflanken arbeiten. Die Betätigung des Spreizelementes erfolgt zweckmäßigerweise durch das schon erwähnte Betätigungselement, das vorzugsweise in Baueinheit mit dem Befestigungselement ausgeführt sein kann.

Die Klemmschenkel befinden sich zweckmäßigerweise an einem Basisteil, über das die Verbindung zu dem den Sensor zugeordneten Kupplungsteil erfolgt. Basisteil und Klemmschenkel können einstückig miteinander ausgebildet sein und beispielsweise aus Metall bestehen, wobei sich Aluminiummaterial empfiehlt. Allerdings wäre auch eine mehrteilige Ausführungsform denkbar, beispielsweise derart, daß das Basisteil als spritzgegossenes Kunststoffteil ausgeführt ist, während die Klemmschenkel als laschenartige, aus Edelstahl oder Federstahl bestehende Stanzbiegeteile ausgeführt sind. Als besonders zweckmäßig für das Basisteil und/oder die Klemmschenkel empfiehlt sich auch eine Ausgestaltung als metallisches Druckgußteil oder als Metall-Spritzgußteil (MIM = Metal Injected Moulding).

Eine besonders sichere Sensorverankerung ist möglich, wenn die zugeordnete Verankerungsnut, die beispielsweise am Gehäuse eines fluidbetätigten Linearantriebes vorgesehen sein kann, über abgestufte Nutflanken verfügt und beispielsweise als hinterschnittene T-Nut ausgeführt ist. Hier können die Klemmschenkel derart ausgeführt sein, daß sie in der Klemmstellung jeweils eine Stufe der benachbarten Nutflanke an der dem Nutgrund zugewandten Seite hintergreifen und dadurch die Verankerungseinheit in Richtung zum Nutgrund beaufschlagen. Dabei kann das Basisteil mit einer dem Nutgrund zugewandten Abstützfläche gegen diesen Nutgrund vorgespannt werden, was die Einhaltung eines reproduzierbaren Radialabstandes zu einem den Sensor betätigenden Aktivierungselement gewährleistet. Die Abstützfläche kann alternativ oder zusätzlich auch am Sensor vorgesehen sein.

Das die Klemmfunktion der Klemmschenkel verursachende Spreizelement ist vorzugsweise vergleichbar einem Klemmkeil ausgeführt, wobei die Schrägflächen vorzugsweise derart geneigt sind, daß bei aktivierter Klemmfunktion eine Selbsthemmung zwischen dem Spreizkörper und den Klemmschenkeln vorliegt. Dadurch ist es möglich, das gegebenenfalls vorhandene kombinierte Befestigungs- und Betätigungselement zu entfernen, ohne die Spreizfunktion des Spreizkörpers aufzuheben.

Indem der Spreizkörper in Abhängigkeit von der Gestaltung der aktuell zugeordneten Verankerungsnut unterschiedlich weit zwischen die Klemmschenkel eintauchen kann, ergibt sich beim Verankerungsvorgang ein selbsttätiger Toleranzausgleich.

Ein weiterer Vorteil der erfindungsgemäßen Vorrichtung besteht darin, daß sie sich bei Bedarf so auslegen läßt, daß sie zusammen mit dem Sensor über die dem Nutgrund gegenüberliegende Nutöffnung hinweg in die Verankerungsnut eingeführt werden kann. Der Austausch des Sensors ist somit auch dann sehr einfach, wenn die Verankerungsnut stirnseitig aufgrund irgendwelcher Anbauten nicht zugänglich sein sollte.

Nachfolgend wird die Erfindung anhand der beiliegenden Zeichnung näher erläutert. In dieser zeigen:
- Figur 1: in schematischer Darstellung einen von einem pneumatisch betätigten Arbeitszylinder gebildeten Linearantrieb, der unter Verwendung einer bevorzugten Bauform der erfindungsgemäßen Verankerungsvorrichtung mit einem Sensor bestückt ist, das Ganze in einem die Verankerungsnut enthaltenden Längsschnitt,
- Figur 2: eine Seitenansicht der Anordnung aus Figur 1 in vergrößerter Teildarstellung mit Blickrichtung gemäß Pfeil II aus Figur 1,
- Figur 3: einen Teillängsschnitt durch die Anordnung aus Figur 2 gemäß Schnittlinie III - III,
- Figur 4: einen Querschnitt durch die Anordnung aus Figuren 2 und 3 gemäß Schnittlinie IV - IV, wobei die aktivierte Klemmfunktion der Verankungseinheit gezeigt ist,
- Figur 5: die Anordnung aus Figuren 1 bis 3 bei deaktivierter Klemmfunktion der Verankerungseinheit in einer der Figur 4 entsprechenden Querschnittsdarstellung,
- Figur 6: in perspektivischer Darstellung einen mit der Verankerungseinheit kombinierten Sensor vor der Montage in der Verankerungsnut, und
- Figur 7: in einer der Figur 3 entsprechenden Schnittdarstellung die Möglichkeit der Entfernung des Sensors bei unverändert in der Verankerungsnut fixierter Verankerungseinheit.

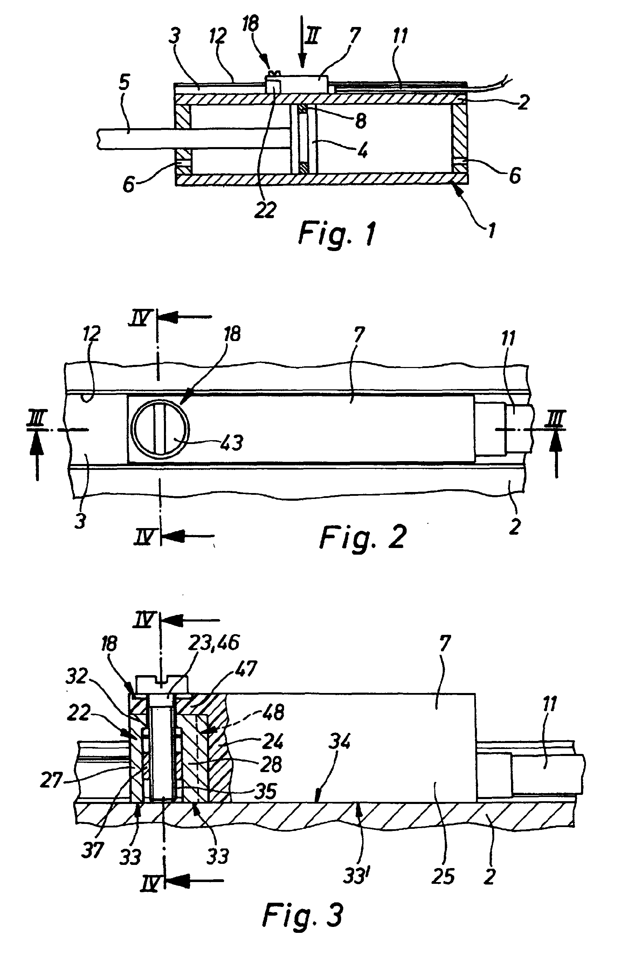

Die Figur 1 zeigt schematisch einen Linearantrieb 1, vorliegend in der Bauform eines fluidbetätigten Arbeitszylinders, der ein Gehäuse 2 aufweist, daß an seiner Außenfläche mit mindestens einer sich linear erstreckenden Verankerungsnut 3 versehen ist. Im Innern des Gehäuses 2 befindet sich ein axial beweglicher Kolben 4, der mit einem nach außen geführten und beispielhaft als Kolbenstange ausgeführten Abgriffsteil 5 verbunden ist. Mit dem Abgriffsteil 5 läßt sich außerhalb des Gehäuses 2 ein beliebiges zu bewegendes Teil verbinden.

Durch Fluidzufuhr und/oder -abfuhr bezüglich den beiden vom Kolben 4 begrenzten Arbeitsräumen über gehäuseseitige Fluidkanäle 6 läßt sich der Kolben 4 zusammen mit dem Abgriffsteil 5 zu einer hin- und hergehenden Linearbewegung antreiben. Der Linearantrieb könnte auch in kolbenstangenloser Bauform ausgeführt sein.

Die Figuren 1 bis 3 zeigen einen lösbar in der Verankerungsnut 3 des Gehäuses 2 befestigten Sensor 7. Er gestattet die Erfassung einer Position des Kolbens 4 bzw. des Abgriffsteils 5. Zu diesem Zweck ist der Kolben 4 mit einem Aktivierungselement 8 versehen, das den Sensor 7 berührungslos betätigt, wenn es sich an diesem im Rahmen der Kolbenbewegung vorbeibewegt. Um eine beliebige Kolbenposition erfassen zu können, läßt sich der Sensor 7 längs der Verankerungsnut 3 in beliebigen Positionen festlegen.

Die Verankerungsnut 3 erstreckt sich beim Ausführungsbeispiel über die gesamte Baulänge des Gehäuses 2, wobei sie an ihren beiden Stirnseiten offen ist und an ihrer vom Gehäuse 2 wegweisenden Längsseite eine schlitzartige Nutöffnung 12 aufweist. Das Einsetzen und Entnehmen des Sensors 7 in die bzw. aus der Verankerungsnut 3 ist beim Ausführungsbeispiel durch die schlitzartige Nutöffnung 12 hindurch möglich und kann somit auch dann erfolgen, wenn die Verankerungsnut 3 stirnseitig aufgrund des momentanen Einsatzzweckes des Linearantriebes 1 nicht zugänglich ist.

Es ist darauf hinzuweisen, daß die Verankerungsnut 3 abgesehen vom Gehäuse 2 eines Linearantriebes 1 auch an beliebigen anderen Bauteilen vorgesehen sein kann. Auch der Träger für das Aktivierungselement 7 ist nicht notwendigerweise ein Kolben, sondern kann in Abhängigkeit vom Einsatzfall auch von einem beliebigen anderen Trägerkörper gebildet sein, wobei dieser Trägerkörper und das die Verankerungsnut aufweisende Bauteil relativ zueinander beweglich sind.

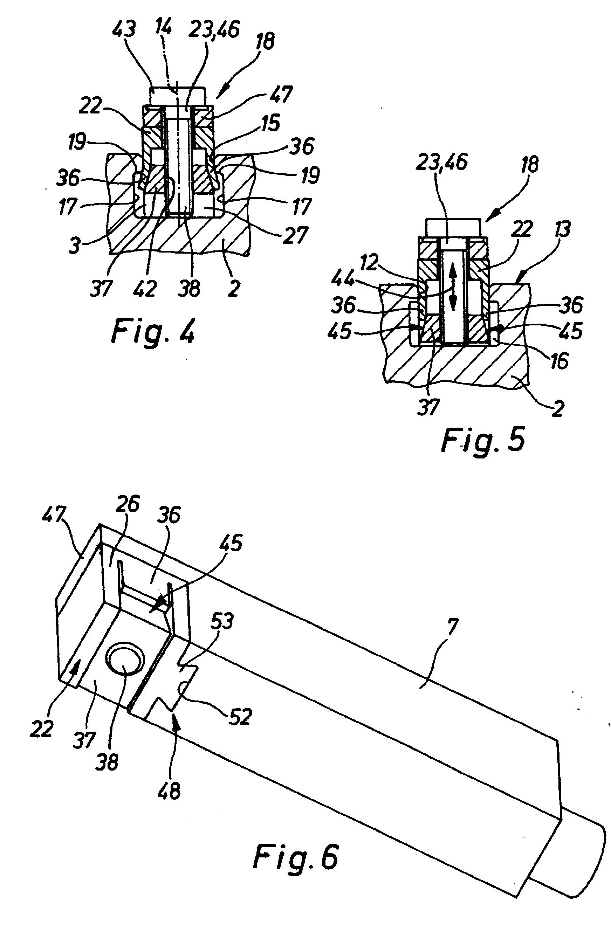

Wie aus Figuren 4 und 5 hervorgeht, ist die Verankerungsnut 3 des Ausführungsbeispiels als sogenannte T-Nut ausgeführt, die einen im wesentlichen T-ähnlichen Querschnitt hat. Sie ist in die Außenoberfläche 13 des Gehäuses 2 eingelassen und verfügt über einen sich in Tiefenrichtung 14 unmittelbar an die Außenoberfläche 13 anschließenden Nuthals 15, der die oben erwähnte schlitzartige Nutöffnung 12 bildet. Auf diesen Nuthals 15 folgt nach innen hin ein verbreiteter Verankerungsabschnitt 16, der insgesamt einen quadratischen oder rechteckförmigen Querschnitt aufweist. Auf diese Weise ergibt sich ein in Tiefenrichtung abgestufter Verlauf der beiden längsseitigen Nutflanken 17, wobei jeweils eine sich in Nutlängsrichtung erstreckende Stufe 19 vom Übergangsbereich zwischen dem engeren Nuthals 15 und dem breiteren Verankerungsabschnitt 16 gebildet ist. Allerdings wäre auch eine andere hinterschnittene Nutform denkbar, beispielsweise eine Schwalbenschwanznut.

Der Sensor 7 des Ausführungsbeispiels ist so ausgelegt, daß er auf ein Magnetfeld anspricht. Er kann beispielsweise als elektronischer magnetoresistiver Sensor oder als sogenannter Reed-Schalter ausgeführt sein. Das Aktivierungselement 8 ist in diesem Falle zweckmäßigerweise ein Permanentmagnet. Die Erfindung läßt sich aber auch bei auf anderen Wirkprinzipien beruhenden Sensoren einsetzen.

Bei 11 ist ein von dem Sensor 7 abgehendes elektrisches Kabel angedeutet, über das der Sensor 7 mit einer nicht näher dargestellten Steuer-, Anzeige- und/oder Auswerteeinrichtung verbunden werden kann.

Die Befestigung des Sensors 7 in der Verankerungsnut 3 erfolgt mittels einer allgemein durch Bezugsziffer 18 bezeichneten Verankerungsvorrichtung. Diese enthält beim Ausführungsbeispiel eine in der Verankerungsnut 3 festklemmbare Verankerungseinheit 22 und ein zur Aktivierung sowie bei Bedarf auch zur Deaktivierung der Klemmfunktion dienendes Betätigungselement 23.

Am Sensor 4 ist ein Kupplungsteil 24 vorgesehen, das beim Ausführungsbeispiel einen einstückigen Bestandteil des vorzugsweise aus Kunststoffmaterial bestehenden Sensorgehäuses 25 darstellt. Der Sensor 7 hat längliche Gestalt, wobei sich das Kupplungsteil 24 an einem der axialen Endbereiche des Sensors 7 befindet.

Das Kupplungsteil 24, und somit auch der diesbezügliche integrale Sensor 7, ist lösbar mit der Verankerungseinheit 22 verbindbar. Die Figuren 1 bis 6 zeigen den verbundenen Zustand, in dem der Sensor 7 mit der Verankerungseinheit 22 zu einer voneinander trennbaren Baueinheit zusammengefaßt ist.

Zum besseren Verständnis der Erfindung sei diejenige Position, die die in der Verankerungsnut 3 festgeklemmte Verankerungseinheit 22 bezüglich der Verankerungsnut 3 einnimmt, als Arbeitsposition bezeichnet. Es ist nun von Vorteil, daß sich das Kupplungsteil 24 einschließlich des Sensors 7 - wobei wie erwähnt vorliegend das Kupplungsteil 24 vom Sensor 7 selbst gebildet wird - bei Bedarf von der Verankerungseinheit 22 und aus der Verankerungsnut 3 entfernen läßt, ohne die Verankerungseinheit 22 ihrerseits aus der Arbeitsposition entfernen zu müssen, die weiterhin festgeklemmt bleibt. Wird anschließend der Sensor 7 oder, im Falle einer Funktionsstörung, ein anderer typidentischer Sensor 7 neuerlich an der Verankerungseinheit 22 fixiert, ergibt sich somit keine Lageabweichung in der Betriebsposition des Sensors. Es ist also ein Sensoraustausch möglich, ohne daß die Notwendigkeit zu einer Neujustierung der Sensorposition bestünde. Diese wird durch die stets ihre Arbeitsposition beibehaltende Verankerungseinheit 22 gewährleistet.

Die Verankerungseinheit 22 enthält beim Ausführungsbeispiel ein eine etwa würfelähnliche Außengestalt aufweisendes Basisteil 26 mit zwei unter Parallelabstand zueinander angeordneten vorderen und rückseitigen Wänden 27, 28, die über eine obere Wand 32 fest miteinander verbunden sind. Die rückseitige Wand 28 ist bei angesetztem Kupplungsteil 24 dem Sensor 7 zugeordnet. Die Breite der Wände ist so gewählt, daß sich die Verankerungseinheit 22 über die schlitzartige Nutöffnung 12 hinweg in die Verankerungsnut 3 einsetzen läßt, bis sie mit an der vorderen und rückseitigen Wand 27, 28 des Basisteils 26 vorgesehenen Abstützflächen 33 am Nutgrund 34 der Verankerungsnut 3 zur Anlage kommt.

Zwischen den beiden in Längsrichtung der Verankerungsnut 3 orientierten vorderen und rückseitigen Wänden 27, 28 befindet sich ein Zwischenraum 35. In diesen hinein erstrecken sich ausgehend von der oberen Wand 32 zwei in Querrichtung der Verankerungsnut 3 zueinander beabstandete Klemmschenkel 36. Sie sind beim Ausführungsbeispiel einstückig mit dem Basisteil 26 ausgeführt und seitlich angeordnet, so daß sie bei in Arbeitsposition befindlicher Verankerungseinheit 22 jeweils einer der beiden Nutflanken 17 zugeordnet sind. Die Klemmschenkel 36 enden mit Abstand vor dem Nutgrund 34, wobei sie allerdings zumindest soweit in Tiefenrichtung 14 in die Verankerungsnut 3 eintauchen, daß sie sich bis zu einem tiefer als die Stufen 19 liegenden Bereich der Verankerungsnut 3 erstrecken.

Die Verankerungseinheit 22 enthält desweiteren ein Spreizelement 37, das relativ zu dem Basisteil 26 derart bewegbar ist, daß es ausgehend von der der oberen Wand 32 entgegengesetzten Unterseite des Basisteils 26 mehr oder weniger weit in den Zwischenraum 35 eintaucht. Die Bewegung des Spreizelementes 37 wird durch das schon erwähnte Betätigungselement 23 hervorgerufen.

Die Figuren 5 und 6 zeigen die Verankerungseinheit 22 bei deaktivierter Klemmfunktion. Das Spreizelement 37 befindet sich hier in größtmöglichem Abstand zu der oberen Wand 32 und liegt nicht oder mit nur geringer Kraft an den freien Enden und/oder an den einander zugewandten Innenflächen der Klemmschenkel 36 an. In der dabei vorliegenden Lösestellung sind die Klemmschenkel 36 derart positioniert, daß sie ein Einsetzen oder Herausnehmen der Verankerungseinheit 22 bezüglich der Verankerungsnut 3 nicht behindern.

Zum Aktivieren der Klemmfunktion wird das Spreizelement 37 in Richtung zur oberen Wand 32 verlagert, wobei es zunehmend in den Zwischenraum 35 eintaucht und aufgrund seiner äußeren Formgebung derart auf die Klemmschenkel 36 einwirkt, daß diese gemäß Figur 4 auseinandergespreizt und gegen die Nutflanken 17 vorgespannt werden.

Die Klemmschenkel 36 werden beim Aufspreizvorgang nach außen gebogen, wobei es sich um eine zumindest zum Teil plastische, vorzugsweise aber um eine elastische reversible Verformung handeln kann. Die zum Verlagern des Spreizelements 37 erforderliche Kraft wird über das Betätigungselement 23 ausgeübt. Dieses ist beim Ausführungsbeispiel als Betätigungsschraube ausgeführt, die die obere Wand 32 des Basisteils 26 von oben bzw. außen her durchsetzt und mit ihrem Gewindeschaft 38 unter Schraubeingriff ein in dem vorzugsweise aus Stahl bestehenden Spreizelement 37 ausgeführtes Gewindeloch 42 durchsetzt. Der außerhalb des Basisteils 26 liegende Schraubenkopf 43 stützt sich mittelbar oder unmittelbar an der oberen Wand 32 des Basisteils 26 ab, so daß das Spreizelement 37 bei einer Drehbetätigung der Betätigungsschraube in den Zwischenraum zwischen den beiden Klemmschenkeln 36 hineingezogen wird.

Der Aufspreizvorgang wird beim Ausführungsbeispiel dadurch hervorgerufen, daß das Spreizelement 37 sich zur oberen Wand 32 hin keilartig verjüngend ausgeführt ist, man also auch von einem Keilkörper sprechen könnte. Seine den Klemmschenkeln 36 zugewandten Schrägflächen 45 verfügen bezüglich der mit der Längsachse des Betätigungselementes 23 und mit der Tiefenrichtung 14 zusammenfallenden Verstellrichtung 44 des Spreizelementes 37 über einen Schrägverlauf. Mit zunehmender axialer Annäherung an die Klemmschenkel 36 taucht somit ein breiterer Abschnitt des Spreizelementes 37 zwischen die Klemmschenkel 36 ein, so daß diese gemäß Figur 4 nach außen gebogen werden, wobei sich ihre Gestalt an den Schrägverlauf der Schrägflächen 45 anpaßt.

Die Neigung der Schrägflächen 45 ist derart gewählt, daß bei aktivierter Klemmfunktion eine durch die vorhandenen Reibkräfte verursachte Selbsthemmung zwischen dem Spreizelement 37 und den Klemmschenkeln 36 vorliegt. Wird in diesem Zustand das Betätigungselement 23 gelöst oder ganz entfernt, hat dies keine Auswirkung auf die klemmende Fixierung der Verankerungseinheit 22 in der Verankerungsnut 3.

Beim Ausführungsbeispiel wird das Basisteil 26 bei aktivierter Klemmfunktion fest gegen den Nutgrund 34 gepreßt. Dies rührt maßgeblich daher, daß die Klemmschenkel 36 bei ihrer Verformung die jeweils gegenüberliegende Stufe 19 der Nutflanke 17 an der dem Nutgrund 34 zugewandten Seite hintergreifen. Dadurch ergibt sich eine das Basisteil 26 in Richtung zum Nutgrund 34 beaufschlagende Kraftkomponente. Ungeachtet eventueller Fertgigungstoleranzen ist somit gewährleistet, daß das Basisteil 26 im verankerten Zustand stets eine reproduzierbare Tiefenposition bezüglich der Verankerungsnut 3 einnimmt. Ist der Sensor 7 in fester Zuordnung an der Verankerungseinheit 22 angebracht, ergibt sich somit ein unabhängig von Toleranzen stets gleichbleibender Radialabstand zwischen dem Sensor 7 und dem Aktivierungselement 8, was eine präzise Schaltfunktion des Sensors 7 sicherstellt.

Eine bestmögliche Präzision des Sensorbetriebes stellt sich allerdings ein, wenn die Anordnung so getroffen ist, daß bei aktivierter Klemmfunktion auch der Sensor 7 mit mindestens einer Abstützfläche 33' gegen den Nutgrund 34 vorgespannt wird. Die Abstützfläche 33' kann beispielsweise von der Außenfläche des Sensorgehäuses 25 gebildet sein. Beim Ausführungsbeispiel wird dies dadurch erreicht, daß das Betätigungselement 23 eine Doppelfunktion übernimmt und gleichzeitig auch ein zur Fixierung des Sensors 7 bzw. des Kupplungsteils 24 an der Verankerungseinheit 22 ermöglichendes Befestigungselement 46 bildet. Es liegt also ein kombiniertes Betätigungs- und Befestigungselement 23, 46 vor, wobei vorzugsweise auf ein einziges Bauteil zurückgegriffen wird, so daß die Verankerungsvorrichtung 18 einer nur geringen Bauteilezahl bedarf.

Das Kupplungsteil 24 ist derart ausgeführt, daß es das Basisteil 26 mit einem Befestigungsabschnitt 47 an der Oberseite übergreift. Der Befestigungsabschnitt 47 liegt dabei zweckmäßigerweise auf der oberen Wand 32 des Basisteils 26 auf. Das kombinierte Betätigungs- und Befestigungselement 23, 46 durchgreift dabei nicht nur die obere Wand 32, sondern auch den mit einer fluchtenden Durchbrechung ausgestatteten darüberliegenden Befestigungsabschnitt 47, wobei der Schraubenkopf 43 gegen den Befestigungsabschnitt 47 arbeitet und über diesen mittelbar auf das Basisteil 26 einwirkt. Gleichzeitig mit dem Basisteil 26 wird somit bei der zum Ausüben der Klemmfunktion erfolgenden Aktivierung des Betätigungs- und Befestigungselementes 23, 46 auch der Sensor 7 fixiert, so daß beim Ausführungsbeispiel der gesamte Befestigungsvorgang durch Betätigung lediglich einer Schraube ausgeführt werden kann.

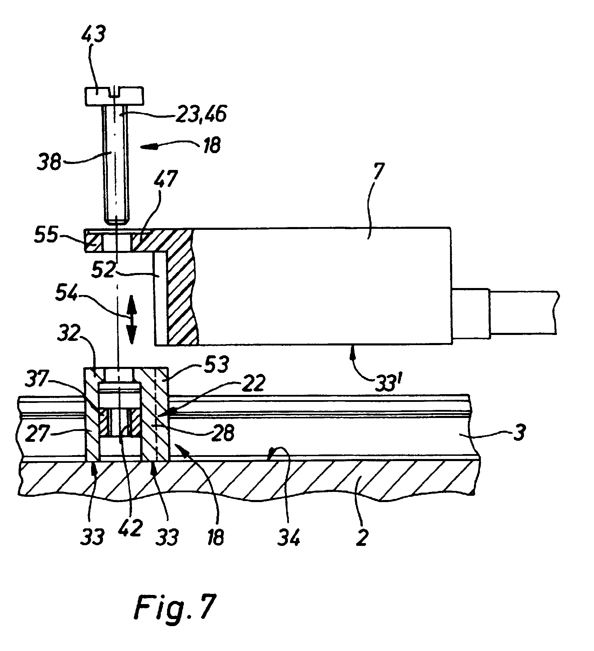

Die Figur 3 zeigt eine Anordnung mit fest verankertem Sensor 7. Soll dieser ausgetauscht werden, beispielsweise aufgrund eines Defektes, ist lediglich das kombinierte Betätigungs- und Befestigungselement 23, 46 zu entfernen. Die Verankerungseinheit 22 bleibt dann aus den oben erwähnten Gründen weiterhin in der Arbeitsposition festgespannt, während die Verbindung zwischen dem Kupplungsteil 24 und der Verankerungseinheit 22 gelöst ist, so daß sich der Sensor 7 entfernen läßt. Dies ist in Figur 7 abgebildet.

Soll auch die Verankerungseinheit 22 gelöst werden, beispielsweise weil sie an anderer Stelle in der Verankerungsnut 3 fixiert werden soll, geschieht dies beim Ausführungsbeispiel dadurch, daß das Betätigungs- und Befestigungselement 23, 46 geringfügig in das Spreizelement 37 eingeschraubt wird, um ihm hernach einen leichten Schlag zu versetzen, der das Spreizelement 37 aus seiner selbsthemmenden Kraftschlußverbindung mit den Klemmschenkeln 36 löst, deren Vorspannung bezüglich den Nutflanken 17 dadurch aufgehoben wird.

Zur Vereinfachung der Montage und Demontage des Sensors 7 bezüglich des Basisteils 26 ist beim Ausführungsbeispiel noch eine lösbare Steckverbindungseinrichtung 48 zwischen diesen Komponenten vorgesehen. Das Kupplungsteil 24 verfügt hierzu über eine hinterschnittene Längsnut 52, in die ein komplementärer Einsteckvorsprung 53 des Basisteils 26 formschlüssig eingreifen kann. Die Anordnung ist dabei so getroffen, daß die die Steckrichtung 54 definierenden Längsachsen der Längsnut 52 und des Einsteckvorsprunges 53, bei in Arbeitsposition befindlicher Verankerungseinheit 22 gesehen, in Tiefenrichtung 14 der Verankerungsnut 3 ausgerichtet sind. Im konkreten Ausführungsbeispiel befindet sich der Einsteckvorsprung 53 an der axial zum Sensor 7 hin orientierten Außenseite der rückseitigen Wand 28 des Basisteils 26.

Der Sensor 7 läßt sich also bei der Montage bequem auf die in der Verankerungsnut 3 fixierte Verankerungseinheit 22 aufstecken, wobei der aufgesteckte Sensor 7 auch ohne Anbringen des Betätigungs- und Befestigungselementes 23, 46 relativ zur Verankerungseinheit 22 axial unbeweglich vorfixiert ist. Zur endgültigen Befestigung wird dann noch das Betätigungs- und Befestigungselement 23, 46 angebracht. Dabei fällt die Kraftrichtung des Betätigungs- und Befestigungselementes 23, 46 mit der Steckrichtung 54 zusammen.

Zweckmäßigerweise sind an dem Kupplungsteil 24 noch geeignete Anschlagmittel 55 vorgesehen, die den Aufsteckweg mit Bezug zum Basisteil 26 begrenzen. Diese Anschlagmittel 55 sind beim Ausführungsbeispiel vom Befestigungsabschnitt 47 des Kupplungsteils 24 gebildet. Auch können zwischen dem Kupplungsteil 24 und der Verankerungseinheit 22 wirkende Rastmittel vorgesehen sein, um den zusammengesteckten Zustand zu fixieren.

Die Steckverbindungseinrichtung 48 ist vorzugsweise als Schwalbenschwanzverbindung ausgeführt. Im übrigen versteht es sich, daß die Anordnung von Längsnut 52 und Einsteckvorsprung 53 auch vertauscht sein kann.

Während beim Ausführungsbeispiel die sich aus der Verankerungsvorrichtung 18 und dem Sensor 7 zusammensetzende Baueinheit nur teilweise in der Verankerungsnut 3 aufgenommen ist, kann selbstverständlich auch eine komplette Integration vorgesehen werden.

Ferner ist zu erwähnen, daß zur Befestigung eines Sensors 7 bei Bedarf auch gleichzeitig mehrere Verankerungsvorrichtungen 18 eingesetzt werden können, wenngleich in der Regel eine einzige Verankerungsvorrichtung 18 bereits ausreichen wird, um einen sicheren Halt zu gewährleisten.

## Patentansprüche

1. Vorrichtung zur lösbaren Verankerung eines Sensors in einer Verankerungsnut, mit einer unter Einnahme einer Arbeitsposition in der Verankerungsnut (3) festklemmbaren Verankerungseinheit (22), und mit einem sensorseitig vorgesehenen, lösbar mit der Verankerungseinheit (22) verbundenen Kupplungsteil (24), das bei in der festgeklemmten Arbeitsposition verbleibender Verankerungseinheit (22) gemeinsam mit dem Sensor (7) von der Verankerungseinheit (22) und aus der Verankerungsnut (3) entfernbar ist.

2. Vorrichtung nach Anspruch 1, dadurch gekennzeichnet, daß das Kupplungsteil (24) als fester Bestandteil des Sensors (7) und dabei insbesondere als einstückiger Bestandteil des Sensorgehäuses (25) ausgeführt ist.

3. Vorrichtung nach Anspruch 1 oder 2, dadurch gekennzeichnet, daß der Verankerungseinheit (22) mindestens ein zur Aktivierung und vorzugsweise auch zur Deaktivierung der Klemmfunktion vorgesehenes, beispielsweise als Schraube ausgeführtes Betätigungselement (23) zugeordnet ist.

4. Vorrichtung nach Anspruch 3, dadurch gekennzeichnet, daß das mindestens eine Betätigungselement (23) gleichzeitig ein zur Fixierung des Kupplungsteils (24) an der Verankerungseinheit (22) dienendes Befestigungselement (46) bildet.

5. Vorrichtung nach Anspruch 4, dadurch gekennzeichnet, daß sich das mindestens eine kombinierte Betätigungs- und Befestigungselement (23, 46) nach aktivierter Klemmfunktion lösen und/oder entfernen läßt, ohne die Klemmfunktion der Verankerungseinheit (22) aufzuheben.

6. Vorrichtung nach Anspruch 4 oder 5, gekennzeichnet durch ein einziges, kombiniertes Betätigungs- und Befestigungselement (23, 46).

7. Vorrichtung nach einem der Ansprüche 1 bis 6, gekennzeichnet durch eine zwischen dem Kupplungsteil (24) und der Verankerungseinheit (22) wirksame lösbare Steckverbindungseinrichtung (48), insbesondere nach Art einer Schwalbenschwanzverbindung.

8. Vorrichtung nach Anspruch 7, dadurch gekennzeichnet, daß die Steckverbindungseinrichtung (48) derart ausgeführt ist, daß die Steckrichtung, bei in Arbeitsposition befindlicher Verankerungseinheit (22) gesehen, in Tiefenrichtung (14) der Verankerungsnut (3) ausgerichtet ist.

9. Vorrichtung nach Anspruch 8, gekennzeichnet durch an dem Kupplungsteil (24) vorgesehene Anschlagmittel (55) zur Begrenzung des Aufsteckweges des Kupplungsteils (24) bezüglich der Verankerungseinheit (22).

10. Vorrichtung nach Anspruch 8 oder 9 in Verbindung mit einem der Ansprüche 3 bis 5, dadurch gekennzeichnet, daß die Kraftrichtung des mindestens eines Betätigungselementes (23) mit der Steckrichtung (54) zusammenfällt.

11. Vorrichtung nach einem der Ansprüche 1 bis 10, dadurch gekennzeichnet, daß die Verankerungseinheit (22) zwei zueinander beabstandete, in der Arbeitsposition jeweils einer der Nutflanken (17) zugeordnete Klemmschenkel (36) aufweist und ferner über ein Spreizelement (37) verfügt, das zur Aktivierung der Klemmfunktion derart zwischen die beiden Klemmschenkel (36) eingreift, daß diese auseinandergespreizt und gegen die Nutflanken (17) vorgespannt werden.

12. Vorrichtung nach Anspruch 11, dadurch gekennzeichnet, daß die Klemmschenkel (36) an einem Basisteil (26) angeordnet sind, über das die Verbindung der Verankerungseinheit (22) zum Kupplungsteil (24) erfolgt.

13. Vorrichtung nach Anspruch 12, gekennzeichnet durch eine einstückige Ausgestaltung des Basisteils (26) und der Klemmschenkel (36) .

14. Vorrichtung nach Anspruch 12 oder 13, dadurch gekennzeichnet, daß das Basisteil (26) und/oder der Sensor (7) über mindestens eine sich in bei in Arbeitsposition befindlicher Verankerungseinheit (22) am Nutgrund (34) der Verankerungsnut (3) abstützende Abstützfläche (33, 33') verfügt.

15. Vorrichtung nach einem der Ansprüche 11 bis 14, dadurch gekennzeichnet, daß die Klemmschenkel (36) derart ausgeführt sind, daß sie bei einer Plazierung der Verankerungseinheit (22) in einer über abgestufte Nutflanken (17) verfügenden Verankerungsnut (3) in der Klemmstellung jeweils eine Stufe (19) der benachbarten Nutflanke (17) hintergreifen und dadurch die Verankerungseinheit (22) in Richtung zum Nutgrund (34) beaufschlagen.

16. Vorrichtung nach einem der Ansprüche 11 bis 15, dadurch gekennzeichnet, daß die Klemmschenkel (36) beim Übergang zwischen der deaktivierten Lösestellung und der aktivierten Klemmstellung eine elastische Verformung erfahren.

17. Vorrichtung nach einem der Ansprüche 11 bis 16, dadurch gekennzeichnet, daß das Spreizelement (37), in der Arbeitsposition gesehen, sich in Richtung zu der dem Nutgrund (34) gegenüberliegenden Nutöffnung (12) keilartig verjüngend ausgeführt ist.

18. Vorrichtung nach einem der Ansprüche 11 bis 17, dadurch gekennzeichnet, daß zwischen dem Spreizelement (37) und den Klemmschenkeln (36) bei aktivierter Klemmfunktion Selbsthemmung vorliegt.

19. Vorrichtung nach einem der Ansprüche 11 bis 18 in Verbindung mit einem der Ansprüche 3 bis 6, dadurch gekennzeichnet, daß das Betätigungselement (23) an dem relativ zu den Klemmschenkeln (36) beweglichen Spreizelement (37) angreift.
